Europäisches Patentamt

European Patent Office

Office européen des brevets

(19)

(11) Veröffentlichungsnummer: **0 333 057**

**A2**

# (12) EUROPÄISCHE PATENTANMELDUNG

(21) Anmeldenummer: **89104262.4**

(22) Anmeldetag: **10.03.89**

(51) Int. Cl.⁴: **G05B 19/04 , G05B 19/10**

(30) Priorität: **15.03.88 DE 3808649**

(43) Veröffentlichungstag der Anmeldung:
**20.09.89 Patentblatt 89/38**

(84) Benannte Vertragsstaaten:
**AT BE CH DE ES FR GB GR IT LI LU NL SE**

(71) Anmelder: **Nixdorf Computer Aktiengesellschaft**
**Fürstenallee 7**
**D-4790 Paderborn(DE)**

(72) Erfinder: **Berthold, Winfried**
**Kesselstrasse 12**
**D-4770 Soest(DE)**

(74) Vertreter: **Schaumburg, Thoenes & Englaender**
**Mauerkircherstrasse 31 Postfach 86 07 48**
**D-8000 München 80(DE)**

(54) **Steuereinrichtung für ein elektrisches bzw. elektromechanisches Gerät.**

(57) Als Hilfsmittel für die Konstruktion einer Steuerung für ein elektrisches bzw. elektromechanisches Gerät dient eine Steuereinrichtung, in der einzeln veränderbare Steuerschaltungen (20, 21, 22, 23, 24) untereinander und mit einem Rechner (10) über ein Bussystem (17) kommunizieren. In den Rechner (10) kann eine Arbeitscharakteristik für das Gerät eingegeben werden, und dieser veranlaßt dann entsprechende Einstellungen in den Steuerschaltungen (20, 21, 22, 23, 24).Die dabei übermittelten Daten werden ausgedruckt und dienen bei Erreichen einer optimalen Arbeitscharakteristik zum Erstellen der endgültigen Steuerung für das Gerät.

**EP 0 333 057 A2**

## Steuereinrichtung für ein elektrisches bzw. elektromechanisches Gerät

Die Erfindung betrifft eine Steuereinrichtung für ein elektrisches bzw. elektromechanisches Gerät mit mehreren jeweils durch eine Steuerschaltung in gegenseitiger funktioneller Abhängigkeit betriebenen Komponenten, deren Funktionsparameter in der jeweiligen Steuerschaltung vorgegeben sind.

Elektrische bzw. elektromechanische Geräte werden in praktisch allen Gebieten der Technik eingesetzt. Lediglich beispielhaft sind die Gebiete der Datenverarbeitungstechnik, der Nachrichtentechnik, des Maschinenbaus und der Haushaltsgeräte zu nennen. Die Steuereinrichtung dient in derartigen Geräten dazu, die Funktionen der einzelnen Komponenten unter Berücksichtigung ihrer gegenseitigen Wechselwirkung so zu steuern, daß sich ein vorgegebener Arbeitsablauf ergibt. Eine derartige Steuerung für Komponenten mit sehr unterschiedlicher Wirkungsweise ist z.B. in einem zeichenseriellen Drucker der Datenverarbeitungstechnik erforderlich. Ein solcher Drucker ist ein elektromechanisches Gerät, das mehrere unterschiedliche Funktionen ausführen muß, die voneinander abhängig sind. Eine Funktion besteht darin, daß ein Aufzeichnungsträger, z.B. ein Papierblatt, in den Drucker eingezogen und in eine Druckposition gebracht wird. Eine andere Funktion ist die Bewegung eines Druckkopfes in Zeilenrichtung. Ferner ist als weitere Funktion der Betrieb der Druckelemente des Druckkopfes erforderlich. Schließlich ist nach einem Druckvorgang der Transport des Aufzeichnungsträgers aus dem Drucker heraus durchzuführen. Solche verschiedenen Funktionen erfordern jeweils eine Steuerschaltung, mit der die Betriebsweise einer Komponente gesteuert wird, die den jeweiligen Bewegungsablauf bewirkt. Dabei ist die gegenseitige funktionelle Abhängigkeit der einzelnen Bewegungsabläufe zu berücksichtigen. Der Transport des Druckkopfes in Zeilenrichtung muß mit dem Betrieb des Druckkopfes koordiniert sein, um eine vorgegebene Typendarstellung auf dem Aufzeichnungsträger zu erzielen. Ferner muß der Transport des Aufzeichnungsträgers durch den Drucker mit dem Druckvorgang und mit dem Transport des Druckkopfes koordiniert sein, um eine einwandfreie Zeilendarstellung zu erzielen. Diese gegenseitigen funktionellen Abhängigkeiten werden durch entsprechende elektrische Verbindungen der einzelnen Steuerschaltungen untereinander berücksichtigt.

Die Entwicklung insbesondere elektromechanischer Geräte wird bisher meist so durchgeführt, daß zunächst ein Prototyp des Geräts gebaut wird, der dann mit einer Steuereinrichtung zu versehen ist. Hierbei müssen Entwickler unterschiedlicher Fachrichtungen zusammenarbeiten. Die Steuereinrichtung wird dem erstellten Prototyp speziell angepaßt und entwickelt. Sie wird dabei zunächst in einem Laboraufbau erstellt, und dann wird der Prototyp des Geräts bei unterschiedlichen Bedingungen betrieben und die Steuereinrichtung laufend den sich dabei herausstellenden Erfordernissen angepaßt. Insgesamt ergibt sich dadurch ein sehr hoher Aufwand an Entwicklungszeit und Entwicklungspersonal sowie ein hoher Bedarf an Bauelementen.

Diese Nachteile könnten vermieden werden, wenn es möglich wäre, nach der Erstellung eines Prototyps dem Elektronik-Entwickler Informationen zu geben, die ihm den Aufbau der Steuerschaltung einer jeden Komponente des Geräts in ihrer endgültig erforderlichen Form ermöglichen.

Es ist deshalb Aufgabe der Erfindung, eine Steuereinrichtung anzugeben, die es dem Geräte-Entwickler gestattet, das Gerät mit unterschiedlichen Arbeitscharakteristiken zu betreiben und die dabei Daten liefert, die für die jeweils eingestellte Arbeitscharakteristik grundsätzliche Schaltungsparameter für jede Steuerschaltung wiedergeben.

Diese Aufgabe wird für eine Steuereinrichtung eingangs genannter Art erfindungsgemäß dadurch gelöst, daß die Steuerschaltungen untereinander und mit einer Datenverarbeitungseinrichtung über ein Bussystem kommunizieren, daß die Funktionsparameter einer jeden Komponente sowie deren funktionelle Abhängigkeit von anderen Komponenten durch Datenaustausch zwischen der Datenverarbeitungseinrichtung und der jeweiligen Steuerschaltung veränderbar sind, daß dieses Verändern durch Eingabe von Werten in die Datenverarbeitungseinrichtung veranlaßt wird, die eine gewünschte Arbeitscharakteristik des Geräts angeben, und daß eine Ausgabevorrichtung für die von der Datenverarbeitungseinrichtung an die jeweilige Steuerschaltung abgegebenen Daten vorgesehen ist.

Eine Steuereinrichtung nach der Erfindung ermöglicht es dem Konstrukteur eines Geräts, das Gerät mit schaltungstechnisch unterschiedlich konfigurierten Steuerschaltungen zu betreiben, um diejenigen Eigenschaften der Steuerschaltungen zu finden, bei denen sich ein optimales Arbeiten des Geräts ergibt. Diese Eigenschaften der Steuerschaltungen kommen in den Daten zum Ausdruck, die von der Datenverarbeitungseinrichtung an die jeweilige Steuerschaltung abgegeben werden und deren schaltungstechnische Konfiguration bestimmen. Wenn diese Daten über die Ausgabevorrichtung verfügbar sind, so können sie dem Elektronik-Entwickler als Vorgabewerte zur Erstellung einer endgültigen, für den Prototyp des Geräts optimal bemessenen Steuereinrichtung zu Verfügung gestellt werden.

Die Steuereinrichtung enthält Steuerschaltungen, die über das Bussystem einen Datenaustausch untereinander und mit der Datenverarbeitungseinrichtung durchführen können. Außerdem sind die Steuerschaltungen durch Zuführung von Daten in ihrer schaltungstechnischen Konfiguration veränderbar. Die hierzu erforderlichen Funktionseinheiten wie Speicher, Schieberegister, Prozessoren usw. sind handelsüblich. Der Datenaustausch über das Bussystem kann nach einem der bekannten Verfahren ablaufen.

Die Datenverarbeitungseinrichtung dient dazu, Werte einer Arbeitscharakteristik des Geräts in solche Daten umzusetzen, die geeignet sind, die schaltungstechnische Konfiguration einer Steuerschaltung zu verändern. Werte einer gewünschten Arbeitscharakteristik sind z.B. Koordinaten der Beschleunigungs- bzw. Abbremskurve eines Transportsystems, Bestromungszeiten elektromechanischer Wandler und Betriebswerte für die elektrische Speisung der einzelnen Komponenten. Dabei berücksichtigt die Datenverarbeitungseinrichtung die gegenseitige funktionelle Abhängigkeit der Steuerschaltungen untereinander durch eine geeignete Programmierung. Wenn nacheinander mehrere unterschiedliche Arbeitscharakteristiken des Geräts mit dieser Steuereinrichtung verwirklicht werden, so ist es möglich, die Arbeitsweise des Geräts abhängig von den entsprechend unterschiedlichen Steuerschaltungseigenschaften zu optimieren. Für die so ermittelte optimale Arbeitscharakteristik können dann die von der Datenverarbeitungseinrichtung an jede Steuerschaltung übermittelten Daten dem Elektronik-Entwickler zur Verfügung gestellt werden, so daß dieser sie zum Aufbau der für die optimale Arbeitscharakteristik erforderlichen Steuereinrichtung nutzen kann. In diesen Daten ist bereits die gegenseitige funktionelle Abhängigkeit der einzelnen Steuerschaltungen untereinander berücksichtigt.

Durch die Erfindung wird also eine Steuereinrichtung geschaffen, die es dem Konstrukteur eines Geräts erlaubt, weitestgehend auf die Entwicklung der für das Gerät vorzusehenden Steuereinrichtung Einfluß zu nehmen, ohne hierfür spezielle Kenntnisse zu besitzen. Erst wenn die charakteristischen Größen für die endgültige Steuereinrichtung abhängig von mechanischen Vorgaben festliegen, wird die Steuereinrichtung ohne weitere Experimentierarbeit aufgebaut.

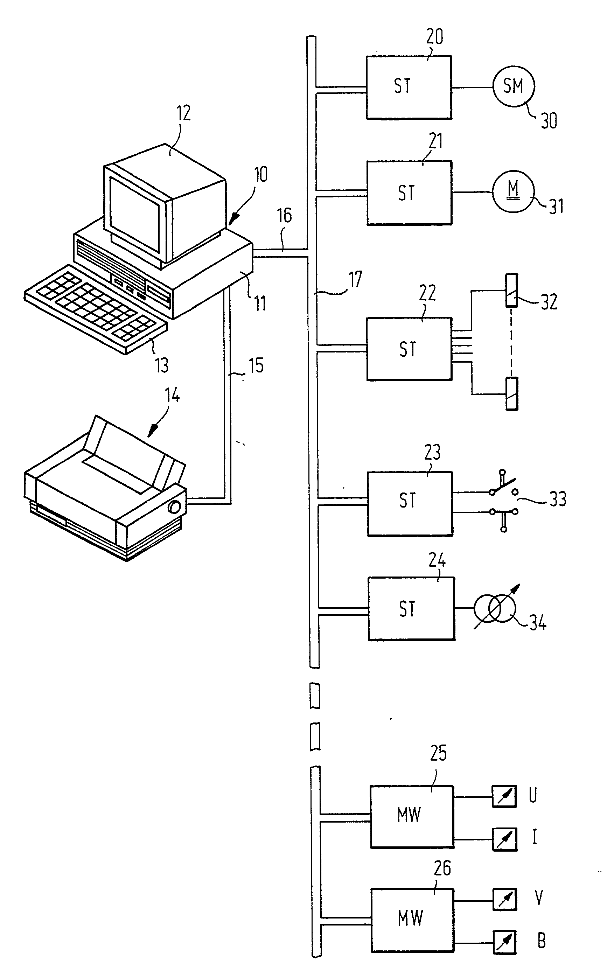

Die Erfindung wird im folgenden an Hand der Figur näher erläutert. Dort ist schematisch als Übersicht eine Steuereinrichtung mit ihren wesentlichen Funktionseinheiten für den Anwendungsfall bei einem zeichenseriellen Drucker dargestellt.

Die Figur zeigt eine Datenverarbeitungseinrichtung 10 mit einem Rechner 11, einem Bildschirmgerät 12 und einer Eingabetastatur 13. An die Datenverarbeitungseinrichtung 10 ist über eine Datenverbindung 15 ein Drucker 14 angeschlossen. Dieser Drucker 14 ist zur Darstellung alphanumerischer und graphischer Informationen geeignet. Die Datenverarbeitungseinrichtung 10 ist über eine Datenverbindung 16 mit einem Bussystem 17 verbunden, an das mehrere Steuerschaltungen 20, 21, 22, 23, 24 angeschlossen sind. Diese Steuerschaltungen dienen zur Steuerung der Komponenten eines in der Figur nicht dargestellten zeichenseriellen Druckers. Diese Komponenten sind ein Schrittmotor 30 zum Transport eines Druckkopfträgers in Zeilenrichtung, ein Gleichstrommotor 31 zum Transport eines Aufzeichnungsträgers, mehrere elektromagnetische Nadelantriebe 32 für die Nadeln des Druckkopfes, Grenzschalter 33 zur Signalgabe bei Erreichen vorgegebener Positionen beweglicher Elemente und ein Stromversorgungsgerät 34. An das Bussystem 17 sind ferner zwei Meßwandler 25 und 26 angeschlossen, die zur Rückmeldung analoger IST-Größen wie Spannung, Strom, Geschwindigkeit und Beschleunigung an die Datenverarbeitungseinrichtung 10 dienen und Steuerschaltungsteile enthalten, die sie zum Datenaustausch über das Bussystem 17 befähigen.

Die in der Figur dargestellte Steuereinrichtung ist also über die einzelnen Steuerschaltungen 20, 21, 22, 23, 24 mit den Komponenten 30, 31, 32, 33, 34 eines Druckers verbunden, der selbst noch keine Steuereinrichtung enthält. In dieser Zusammenschaltung kann der Drucker mit unterschiedlichen Arbeitscharakteristiken betrieben werden, indem die Steuerschaltungen 20, 21, 22, 23, 24 von der Datenverarbeitungseinrichtung 10 her schaltungstechnisch entsprechend unterschiedlich konfiguriert werden. Hierzu werden in die Datenverarbeitungseinrichtung 10 jeweils Werte eingegeben, die einer gewünschten Arbeitscharakteristik entsprechen. Die Datenverarbeitungseinrichtung 10 setzt diese Werte dann in Daten um, die gesondert in jeder Steuerschaltung 20, 21, 22, 23, 24 eine solche schaltungstechnische Konfiguration veranlassen, daß der Zustand aller Steuerschaltungen 20, 21, 22, 23, 24 insgesamt zu der gewünschten Arbeitscharakteristik führt. Nachdem mehrere derartige Arbeitscharakteristiken mit der Steuereinrichtung eingestellt und durchgefahren wurden, kann die für den Drucker günstigste Arbeitscharakteristik festgestellt werden.

Die Daten, die von der Datenverarbeitungseinrichtung 10 an die Steuerschaltungen 20, 21, 22, 23, 24 übermittelt werden, erscheinen auch auf dem Ausdruck des Druckers 14. Somit stehen auch diejenigen Daten zur Verfügung, die zu der in vorstehend beschriebener Weise ermittelten günstigsten Arbeitscharakteristik führen. Diese Daten stehen dann zur endgültigen schaltungstechnischen Realisierung einer Steuereinrichtung für den in der Figur nicht gezeigten Drucker zur Verfügung. Diese Steuereinrichtung ist dem Drucker optimal angepaßt.

Der Datenaustausch über das Bussystem 17 zwischen den Steuerschaltungen 20, 21, 22, 23, 24 untereinander und mit der Datenverarbeitungseinrichtung 10 erfolgt mit Daten, die Ziel und/oder Quelladressen enthalten, welche die jeweilige Steuerschaltung sowie in dieser enthaltene veränderbare Schaltungsteile identifizieren. Solche Schaltungsteile sind z.B. ein FIFO-Speicher für zu druckende Zeichen, RAM-Speicher für Bewegungs-Weglängen, programmierbare Zähler zum Zählen auszuführender Bewegungsschritte, Digital/Analog- und Analog/Digitalumsetzer mit einstellbarer Auflösung und Zuordner. Ausser diesen Schaltungsteilen und den eigentlichen Steuerfunktionen enthalten die Steuerschaltungen 20, 21, 22, 23, 24 die für den Datenaustausch und die vorstehend genannte Adressierung erforderlichen Baugruppen.

Die Meßwandler 25 und 26, die den mit Meßfühlern erhaltenen Analogsignalen entsprechende Digitalsignale an die Datenverarbeitungseinrichtung 10 abgeben, können vorteilhaft für einen SOLL-IST-Vergleich in der Datenverarbeitungseinrichtung 10 genutzt werden. Damit ist es möglich, die jeweils gewünschte mit der daraufhin erhaltenen Arbeitscharakteristik des Druckers zu vergleichen und die vorstehend erläuterte Optimierung der Arbeitscharakteristik bequemer durchzuführen. Andernfalls müßte die jeweils erhaltene Arbeitscharakteristik mit separaten Meßgeräten festgestellt und dann ein gesonderter Vergleich mit den an der Datenverarbeitungseinrichtung 10 eingegebenen Werten vorgenommen werden. Durch den SOLL-IST-Vergleich ist die Datenverarbeitungseinrichtung 10 in der Lage, gewünschte und tatsächliche Arbeitscharakteristiken direkt miteinander zu verknüpfen und das Ergebnis einer solchen Verknüpfung tabellarisch oder graphisch darzustellen.

Die Meßwandler 25 und 26 ermöglichen ferner eine sogenannte IST-Ausgabe.

## Ansprüche

1. Steuereinrichtung für ein elektrisches bzw. elektromechanisches Gerät mit mehreren jeweils durch eine Steuerschaltung in gegenseitiger funktioneller Abhängigkeit betriebenen Komponenten, deren Funktionsparameter in der jeweiligen Steuerschaltung vorgegeben sind, dadurch **gekennzeichnet**, daß die Steuerschaltungen (20, 21, 22, 23, 24) untereinander und mit einer Datenverarbeitungseinrichtung (10) über ein Bussystem (17) kommunizieren, daß die Funktionsparameter einer jeden Komponente (30, 31, 32, 33, 34) sowie deren funktionelle Abhängigkeit von anderen Komponenten durch Datenaustausch zwischen der Datenverarbeitungseinrichtung (10) und der jeweiligen Steuerschaltung (20, 21, 22, 23, 24) veränderbar sind, daß dieses Verändern durch Eingabe von Werten in die Datenverarbeitungseinrichtung (10) veranlaßt wird, die eine gewünschte Arbeits charakteristik des Geräts angeben, und daß eine Ausgabevorrichtung (12, 14) für die von der Datenverarbeitungseinrichtung (10) an die jeweilige Steuerschaltung (20, 21, 22, 23, 24) abgegebenen Daten vorgesehen ist.

2. Steuereinrichtung nach Anspruch 1, dadurch **gekennzeichnet**, daß die über das Bussystem (17) übertragenen Daten Ziel- und/oder Quelladressen enthalten, die die jeweilige Steuerschaltung (20, 21, 22, 23, 24) sowie in dieser enthaltene veränderbare Schaltungsteile identifizieren.

3. Steuereinrichtung nach Anspruch 1 oder 2, dadurch **gekennzeichnet**, daß Steuerschaltungen (20, 21, 22, 24) für die Ausgabe von Betriebsgrößen an aktive Komponenten (30, 31, 32, 34) des Geräts und Steuerschaltungen (23) zur Aufnahme von Betriebsgrößen über meldende Komponenten (33) des Geräts vorgesehen sind.

4. Steuereinrichtung nach einem der Ansprüche 1 bis 3, dadurch **gekennzeichnet**, daß an das Bussystem (17) Meßwandler-Steuerschaltungen (25, 26) zur Aufnahme von Istwert-Meßgrößen angeschaltet sind.

5. Steuereinrichtung nach Anspruch 4, dadurch **gekennzeichnet**, daß in der Datenverarbeitungseinrichtung (10) ein Vergleich der eine gewünschte Arbeitscharakteristik angebenden Werte mit den Istwert-Meßgrößen durchgeführt wird.

6. Steuereinrichtung nach Anspruch 5, dadurch **gekennzeichnet**, daß der Vergleichsergebnis der Ausgabevorrichtung (12, 14) zugeführt wird.